# DEMANDE DE BREVET EUROPEEN

(11) **EP 1 008 446 A1**
(43) Date de publication de la demande: **14.06.2000**
(21) Numéro de dépôt: 98420226.7
(22) Date de dépôt: 07.12.1998
(51) Int. Cl.: B32B 27/32, B65D 65/40

(54) **Film composite multicouches et utilisation de ce film**

(71) Demandeur: WALK PAK HOLDING NV, Curaçao (AN)
(72) Inventeur: Susini, Etienne, 94400 Villecresnes (FR)
(74) Mandataire: Savoye, Jean-Paul

(57) **Abrégé**

Ce film composite multicouches, de qualité alimentaire, comprend une couche de PP prise en sandwich entre deux couches externes de PE. L'épaisseur dudit film est comprise entre 30 µm et 120 µm, les couches externes étant en LLDPE dont la densité d est 0,919 < d < 0,930 et la couche médiane étant en un mélange comprenant 50-70% de PP dont la densité d est 0,895 < d < 0,905, dont le melt index est compris entre 0,75 et 0,85, 10-30% du LLDPE susmentionné et 10-30% d'une polyoléfine thermoplastique dont la densité d est 0,885 < d < 0,905 et dont le melt index est compris entre 0,55 et 0,65.

## Description

La présente invention se rapporte à un film composite multicouches, de qualité alimentaire, comprenant une couche de PP prise en sandwich entre deux couches externes de PE, ainsi qu'à une utilisation de ce film.

Les films composites multicouches sont bien connus et sont généralement destinés à combiner les propriétés physiques ou chimiques de différents matériaux polymères en fonctions des propriétés recherchées.

On a déjà proposé, notamment dans le WO 98/28199 un sachet de conditionnement de liquide comprenant une valve de contrôle de la distribution du liquide, constituée par la superposition de deux films soudés selon deux lignes non convergentes pour former un conduit de distribution par écartement des deux films. Ce conduit présente de préférence un passage d'entrée dont le périmètre correspond à celui d'une paille dont l'extrémité est renflée. Ce film présente une élasticité suffisante pour permettre de se dilater lors de l'introduction de cette paille et de se resserrer ensuite autour d'elle pour empêcher son retrait dudit conduit. La paille est ainsi solidaire du sachet et ne peut être retirée que de la valeur nécessaire pour permettre la fermeture du conduit formant la valve.

Le matériau du film formant la valve doit donc présenter une élasticité suffisante pour se serrer autour de la paille tout en permettant le passage de la partie renflée. Ce film doit être compatible avec des boissons et donc répondre aux normes relatives aux produits alimentaires. De préférence, ce matériau doit conserver ses propriétés même après avoir été soumis à une température comprise entre 80° et 90°C, qui est fréquemment celle de la boisson au moment de son conditionnement dans le sachet.

La réunion de toutes ces propriétés dont certaines sont contradictoires n'est pas facile à obtenir même avec la combinaison de plusieurs couches de différents polymères.

Le but de la présente invention est l'obtention d'un film susceptible de satisfaire au moins les exigences principales c'est-à-dire, en plus des propriétés de souplesse nécessaire pour permettre la fermeture étanche du conduit formant la valve, les propriétés élastiques et la compatibilité avec les normes alimentaires. De préférence, le film selon l'invention devrait résister à la température du liquide à conditionner qui peut s'élever à 80°, voire 90°, en gardant intactes ses propriétés de souplesse et d'élasticité.

A cet effet, la présente invention a tout d'abord pour objet un film composite multicouches du type susmentionné, tel que défini par la revendication 1. Elle a également pour objet une utilisation de ce film telle que définie par la revendication 7. Différentes exécutions préférées du film composite correspondent aux définitions données dans les revendications dépendantes de la revendication 1.

Les tests effectués avec le film multicouches objet de la présente invention ont montré qu'un tel film permet de répondre à l'ensemble des exigences susmentionnées, aussi bien en ce qui concerne la valve que la capacité de retenue de la paille dans le conduit de la valve et évidemment l'introduction de cette paille dans ce conduit. Ce film permet en outre de conserver l'ensemble de ces propriétés après un conditionnement du liquide effectué à une température d'au moins 80°C et qui peut atteindre 90°C.

L'invention sera mieux comprise à la lecture des exemples qui vont suivre.

Selon une forme d'exécution, les deux couches externes du film multicouches objet de la présente invention sont formées d'un LLDPE (Linear Low Density Polyéthylène), le Dow Elite® 5110, dont la densité d est de 0,925 et le melt index MI de 0,85 alors que le point de ramollissement Vicat T°ᵥ est de 113°C. De préférence, on ajoute un agent de glissement, dans cet exemple, 900 ppm d'Erucamide® qui est un dérivé de l'acide erucique dont la molécule est cis-docosèn-13 amide, dans au moins une des deux couches externes du film, c'est-à-dire celle qui se trouvera à l'intérieur du canal formant la valve et qui sera donc en contact avec la paille de prélèvement du liquide en vue de faciliter son glissement à l'intérieur du conduit formant la valve réalisée à l'aide du film objet de la présente invention.

La couche médiane de ce film prise en sandwich entre les couches externes susmentionnées est constituée d'un mélange de 60% de PP, le Moplen® EP-Q 30RF de Himont, un copolymére hétérophasique dont la densité d est de 0,9, le melt index MI de 0,8 et le point de ramollissement Vicat T°ᵥ de 150°C. Cette couche médiane comporte encore 20% du LLDPE utilisé pour former les deux couches externes susmentionnées et 20% d'une polyoléfine thermoplastique, l'Adflex® Q100F fabriquée par Himont, dont la densité d est de 0,89 et le melt index MI est de 0,6.

Le rôle de cette polyoléfine thermoplastique est de conférer une élasticité suffisante au polypropylène, pour permettre au film formant la valve et en particulier le conduit d'entrée débouchant dans la valve proprement dite, de se déformer élastiquement au passage d'une partie de retenue renflée de la paille de prélèvement du liquide lors de son introduction dans cette valve. En effet, la longueur du périmètre de ce conduit d'entrée est choisie pour correspondre à celle du périmètre de cette paille, de sorte qu'après avoir introduit la partie de retenue renflée de cette paille, le conduit se resserre autour de la paille et s'oppose à sa sortie.

Cette couche médiane du film objet de cette invention a également pour rôle de conférer à ce film une résistance à une température de 80° à 90°C, de manière à permettre le remplissage des enceintes ou sachets, dont la valve formée du film objet de la présente invention est solidaire, par des boissons conditionnées à de telles températures. Ce remplissage à chaud est effectué pour toutes sortes de boissons, notamment le lait ou les boissons à base de lait ainsi que les jus de fruits. Il doit conserver ses propriétés, en particulier ses propriétés élastiques après le conditionnement à chaud de la boisson.

Le film ainsi fabriqué doit aussi pouvoir être soudé sans que le soudage ne provoque sa dégradation, c'est-à-dire que celui-ci doit conserver sa compatibilité alimentaire avec les boissons qui sont conditionnées.

Les différents essais réalisés pour la mise au point de ce film multicouches ont permis de constater que si l'on peut varier l'épaisseur du film dans une plage assez étendue en fonction des besoins, de 30 µm à environ 120 µm. L'épaisseur du film est de préférence aussi mince que possible afin de permettre une cadence de fabrication élevée. Toutefois, le film étant composé de trois couches, il faut que les épaisseurs des couches respectives restent suffisantes pour pouvoir être extrudées. De plus, comme de préférence la couche médiane est plus épaisse que chacune des couches externes, il n'est pas possible en pratique de descendre au-dessous de 30 µm. Dans l'exemple réalisé, le film avait une épaisseur de 40 µm, avec une couche médiane de 20 µm et deux couches externes de 10 µm.

Pour permettre une bonne fermeture de la valve formée à partir du film objet de cette invention, celui-ci doit avoir une bonne souplesse. Dans le cas du LLDPE formant les couches externes et entrant dans la composition de la couche médiane, la souplesse est une fonction de la densité d. C'est la raison du choix du LLDPE dont la densité d peut légèrement varier dans une fourchette comprise entre 0,919 < d < 0,930. Pour le PP, la souplesse est fonction de la densité et du melt index MI. La densité d peut varier entre 0,895 < d < 0,905, tandis que le melt index peut varier entre 0,75 et 0,85.

La température Vicat qui est la température de transition vitreuse, c'est-à-dire la température au-dessus de la quelle le matériau passe de l'état vitreux (solide) à l'état visco-élastique, ne doit pas être trop éloignées entre les différentes couches pour permettre leur coextrusion. Dans l'exemple susmentionné, le point Vicat T°ᵥ du LLDPE doit être > 100°C, tandis que celui du PP doit être < 160°C. De préférence, ces points sont compris entre 110° et 150°C.

La proportion d'agent de glissement, dans cet exemple l'Erucamide® doit être inférieure à 1300 ppm. Bien que cet agent de glissement ne soit nécessaire que pour la couche du film multicouche adjacente à la face de cette feuille destinée à être située à l'intérieur du conduit de la valve, il est préférable de l'incorporer aux deux couches externes étant donné qu'il est ensuite très difficile de faire la différence entre ces deux couches externes et qu'il y aurait donc un risque de tourner le film du mauvais côté. En ayant les deux côtés identiques, ce problème n'existe plus.

De préférence, le film selon l'invention, au moins dans son utilisation spécifique pour la confection de la valve susmentionnée, n'est soumis à aucun traitement d'oxydation corona.

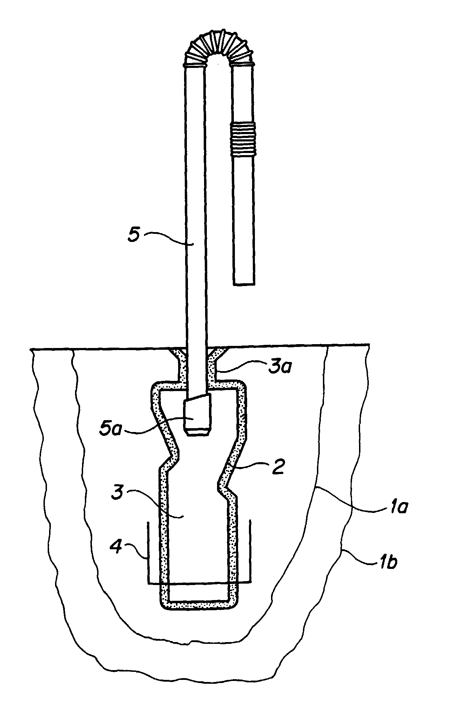

La figure unique du dessin annexé représente, schématiquement et à titre d'exemple, une vue en plan d'une valve réalisée à l'aide d'un film multicouches objet de la présente invention.

Cette valve est destinée à se trouver à l'intérieur d'un récipient, notamment un sachet étanche, non représenté destiné au conditionnement d'un liquide, notamment d'une boisson. On voit sur cette figure deux épaisseurs 1a, 1b de ce film superposées. Ces deux épaisseurs de film 1a, 1b sont réunies par une ligne de soudage 2, ménageant entre elles un conduit 3 formant la valve de distribution. Une découpe 4 permet de faire communiquer le conduit 3 avec l'extérieur, c'est-à-dire avec le contenu du récipient. Ce conduit 3 est normalement fermé, les deux épaisseurs de film 1a, 1b étant jointives. C'est en introduisant un élément pour les écarter que la valve s'ouvre et que le liquide peut alors circuler entre l'intérieur du récipient et l'extérieur à travers le conduit 3. L'élément servant à ouvrir le conduit 3 est lui-même formé par un conduit, notamment par une paille 5.

L'extrémité de cette paille présente un renflement 5a, tel que décrit dans le EP 98420015.4. La portion d'entrée 3a du conduit 3 de la valve est rétrécie et présente un périmètre correspondant à celui de la paille 5, de sorte que cette portion d'entrée 3a s'ajuste autour de cette paille 5 et s'oppose au passage de la partie renflée 5a. Pour permettre l'introduction de la paille 5 à travers cette portion d'entrée 3a rétrécie, l'extrémité avant de la partie renflée 5a de la paille 5 présente une section croissant progressivement, alors que l'arrière de cette partie renflée est reliée par une portée à la partie cylindrique de la paille 5, ce qui l'empêche de ressortir à travers la portion d'entrée 3a du conduit 3.

Pour obtenir cet ajustement de la portion d'entrée 3a du conduit 3 autour de la paille, en permettant cependant le passage de la partie renflée 5a, le film multicouches 1a, 1b formant cette valve doit présenter une élasticité suffisante pour se resserrer autour de la paille 5 après le passage de cette partie renflée 5a. C'est notamment l'un des rôles du film multicouches objet de l'invention.

## Revendications

1. Film composite multicouches, de qualité alimentaire, comprenant une couche de PP prise en sandwich entre deux couches externes de PE, caractérisé en ce que l'épaisseur dudit film est comprise entre 30 µm et 120 µm, les couches externes étant en LLDPE dont la densité d est 0,919 < d < 0,930 et la couche médiane étant en un mélange comprenant 50-70% de PP dont la densité d est 0,895 < d < 0,905 et dont le melt index est compris entre 0,75 et 0,85, 10-30% du LLDPE susmentionné et 10-30% d'une polyoléfine thermoplastique dont la densité d est 0,885 < d < 0,905 et dont le melt index est compris entre 0,55 et 0,65.

2. Film composite selon la revendication 1, caractérisé en ce la température Vicat T°ᵥ du LLDPE est > 100°C, tandis que celle du PP est < 160°C.

3. Film composite selon l'une des revendications précédentes, caractérisé en ce que son épaisseur est < 60 µm.

4. Film composite selon l'une des revendications précédentes. caractérisé en ce que l'épaisseur de la couche médiane est sensiblement le double de celle de chacune des deux couches externes.

5. Film composite selon l'une des revendications précédentes, caractérisé en ce qu'il n'est soumis à aucun traitement d'oxydation corona.

6. Film composite selon l'une des revendications précédentes, caractérisé en ce que < 1300 ppm d'un agent de glissement du type Erucamide® est ajouté à au moins une des couches externes dudit film.

7. Utilisation du film composite selon l'une des revendications précédentes pour former une valve de contrôle de la distribution d'une boisson, constituée par la superposition de deux couches (1a, 1b) dudit film soudées selon deux lignes non convergentes (2) pour former un conduit de distribution (3) par écartement desdites couches (1a, 1b), le périmètre de la section d'entrée (3a) de ce conduit de distribution (3) correspondant à celui d'un élément cylindrique (5) destiné à l'écartement desdites couches (1a, 1b), afin de s'ajuster autour de cet élément cylindrique (5), ce film présentant une élasticité suffisante pour permettre l'introduction d'un renflement (5a) de section progressivement croissante, dudit élément cylindrique (5a) suivi d'une portée reliant ce renflement à la partie cylindrique dudit élément, empêchant son retrait dudit conduit (3).

8. Utilisation selon la revendication 7, caractérisé en ce que ladite couche externe dudit film à laquelle à été ajouté un agent de glissement est la couche adjacente audit conduit (3).
